(19) Europäisches Patentamt

European Patent Office

Office européen des brevets

(11) **EP 1 689 116 A1**

(12) **EUROPÄISCHE PATENTANMELDUNG**

(43) Veröffentlichungstag:
**09.08.2006 Patentblatt 2006/32**

(51) Int Cl.:
*H04L 9/08* *(2006.01)*

(21) Anmeldenummer: 06002089.8

(22) Anmeldetag: **01.02.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **02.02.2005 DE 102005004796**
**03.06.2005 DE 102005025684**

(71) Anmelder: **Rohde & Schwarz SIT GmbH**
**12489 Berlin (DE)**

(72) Erfinder:
• **Chybiak, Jan**
**13088 Berlin (DE)**
• **Kiessling, Horst, Dr.**
**81675 München (DE)**

(74) Vertreter: **Körfer, Thomas et al**
**Mitscherlich & Partner,**
**Patent- und Rechtsanwälte,**
**Sonnenstrasse 33**
**80331 München (DE)**

(54) **Verfahren zur Nachindividualisierung von bei mindestens einem Zulieferer gefertigten Neben-Geräten bzw. -Systemen durch den Hersteller**

(57) Ein Verfahren zur Nachindividualisierung von bei mindestens einem Zulieferer ($Y_1, Y_2, ..., Y_n$) gefertigten Neben-Geräten bzw. -Systemen ($2_{1,1}, 2_{1,2}, ..., 2_{n,n}$) in einem Telekommunikationssystem durch einen Hersteller (X) erzeugt über eine Key-Agreement-Funktion aus vorläufigen individuellen Daten ($H_{ind}, H_{ind1}, H_{ind2}, ..., H_{indn}$, $H_{ind1,1}, H_{ind1,2}, ..., H_{indn,n}$, $H_{ind}', H_{ind1}', H_{ind2}', ..., H_{indn}'$, $H_{ind1,1}', H_{ind1,2}', ..., H_{indn,n}', N_{ind}, N_{ind1}, N_{ind2}, ..., N_{indn}$, $N_{ind1,1}, N_{ind1,2}, ..., N_{indn,n}, N_{ind}', N_{ind1}', N_{ind2}', ..., N_{indn}'$, $N_{ind1,1}', N_{ind\,1,2}', ..., N_{indn,n}'$) eines beim Hersteller (X) positionierten Haupt-Geräts bzw. -Systems (1) und des Neben-Geräts bzw. - Systems ($2_{1,1}, 2_{1,2}, ..., 2_{n,n}$) endgültige indidviduelle Daten ($d, d_1, d_2, ..., d_n, d_{1,1}, d_{1,2}, ..., d_{n,n}, d', d_1', d_2', ..., d_n', d_{1,1}', d_{1,2}', ..., d_{n,n}'$), die einzig dem Hersteller (X), dem Haupt-Gerät bzw. -System (1) und mindestens einem Neben-Gerät bzw. - System ($2_{1,1}, 2_{1,2}, ..., 2_{n,n}$) bekannt sind.

Hersteller X:

Zulieferer $Y_1$:

$2_{1,1}$    $2_{1,2}$    $2_{1,n}$

1

. . .

Zulieferer $Y_2$:

$2_{2,1}$    $2_{2,2}$    $2_{2,m}$

. . .

Fig. 1

EP 1 689 116 A1

**Beschreibung**

Die Erfindung betrifft ein Verfahren zur Nachindividualisierung von bei mindestens einem Zulieferer gefertigten Neben-Geräten bzw. -Systemen durch den Hersteller sowie ein entsprechendes Telekommunikationssystem.

Heutige elektronische Geräte bzw. Systeme in unterschiedlichsten Anwendungsfeldern - z.B. KFZ-Elektronik, Unterhaltungs-Elektronik, Medizintechnik, Telekommunikationstechnik usw. - weisen eine Vielzahl von Funktionalitäten auf, die softwaretechnisch realisiert sind. Die Anwendungssoftware wird entweder bei der Herstellung des Geräts bzw. Systems oder im Rahmen einer Software-Aktualisierung (Update) in einen nichtflüchtigen Speicher - beispielsweise ein Flash- oder EEPROM-Speicher - des Geräts bzw. Systems während eines Boot-Vorgangs geladen.

Da im Zuge der zunehmenden globalen Arbeitsteilung die Produktion von Geräte- bzw. System-Hardware bei einem oder mehreren vom Hersteller beauftragten Zulieferern erfolgt, während die Geräte- bzw. System-Software i.a. beim Hersteller entwickelt wird, erfolgt ein Datentransfer der Applikations- und Systemsoftware vom Hersteller zum jeweiligen Zulieferer, der die Applikations- und Systemsoftware im Auftrag des Herstellers in die Geräte- bzw. System-Hardware integriert. Um einen Datenmissbrauch beim Datentransfer der Applikationssoftware vom Hersteller zum jeweiligen Zulieferer zu verhindern, wird die Applikations- und Systemsoftware beim Hersteller mittels eines Schlüssels verschlüsselt, der dem jeweiligen Zulieferer zur Entschlüsselung der Applikations- und Systemsoftware geliefert wird. Die korrekte Herkunft der Applikations- und Systemsoftware ist beim Zulieferer mit Hilfe eines weiteren Schlüssels zu überprüfen. Schließlich sind für die Identifizierung der installierten Applikations- und Systemsoftware und der verwendeten Geräte- und System-Hardware kennzeichnende Daten erforderlich. Alle diese Daten - Schlüssel für die Codierung, Signaturschlüssel für die Bestimmung der Herkunft, kennzeichnende Daten - stellen individuelle Daten des Geräts bzw. Systems dar und werden zusammen mit den Programm- und Parameterdaten der Applikations- und Systemsoftware im Rahmen eines Boot-Vorgangs in den nichtflüchtigen Speicherbereich des Gerätes bzw. Systems vom Zulieferer geladen.

Aus dem Stand der Technik sind eine Vielzahl von Verfahren zur Verschlüsselung von Daten und zur Verifizierung der Herkunft von Daten bekannt. Aus der Vielzahl von Verfahren ist für obige Anwendung ein Verfahren auszusuchen, das folgenden Anforderungen genügt:

(1) Möglichkeit, das Neben-Gerät bzw. -System beim Zulieferer vom Produktionsbeginn bis zur Auslieferung an den Hersteller mit vorläufigen, individuellen Daten - Codierungsschlüssel, Signaturschlüssel, kennzeichnende Daten - zu versehen, die entweder geheim oder nicht-geheim sind,

(2) Möglichkeit, das zum Hersteller ausgelieferte Neben-Gerät bzw. -System mit endgültigen, individuellen Daten, zu versehen, die einzig dem Hersteller bekannt sind, da dieser die Hoheit über das Neben-Gerät und -System im Hinblick auf eine gezielte Weiternutzung desselben - beispielsweise durch den Endanwender - besitzen muß.

Ein Verfahren, das diesen Anforderungen am nächsten kommt, ist das in Menezes A.: "Handbook of Applied Cryptography", CRC-Press, 1997, Seite 516 bis 541, publizierte Key-Agreement-Verfahren. Beim Key-Agreement-Verfahren werden zwischen mindestens zwei Kommunikationspartnern jeweils unterschiedliche Daten ausgetauscht, die den einzelnen Kommunikationspartnern jeweils zur Generierung von geheimen Daten dienen, die identisch und damit einzig den beteiligten Kommunikationspartnern bekannt sind. Desweiteren sind die durch das Key-Agreement-Verfahren bei den einzelnen Kommunikationspartnern erzeugten geheimen und identischen Daten vor dem Datenaustausch von den beteiligten Kommunikationspartnern und von außenstehenden Dritten nicht bestimmbar.

Werden folglich mit Hilfe des Key-Agreement-Verfahrens beim Hersteller zwischen einem beim Hersteller platzierten Haupt-Gerät bzw. -System und dem zum Hersteller ausgelieferten Neben-Gerät und -System Daten ausgetauscht, die zur Generierung von identischen, hinsichtlich des jeweiligen Neben-Geräts bzw. -Systems individuellen Daten beim Haupt-Gerät bzw. -System und beim Neben-Gerät bzw. - System dienen und einzig dem Haupt-Gerät bzw. -System, dem Neben-Gerät bzw. -System und dem Hersteller bekannt sind, so ist auf diese Weise die für obig genannte Anwendung erforderliche Anforderung (2) erfüllt.

Da die auf diese Weise bewirkte Generierung von hinsichtlich des jeweiligen Neben-Geräts bzw. -Systems individuellen Daten beim Haupt-Gerät bzw. -System und beim Neben-Gerät bzw. -System einzig dem Haupt-Gerät bzw. - System, dem Neben-Gerät bzw. -System und dem Hersteller, aber nicht dem Zulieferer bekannt sind, können diese Daten nachteilig nicht gleichzeitig zur Individualisierung des jeweiligen Neben-Gerätes und -Systems beim Zulieferer bis zum Zeitpunkt der Auslieferung an den Hersteller im Sinne der Anforderung (1) genutzt werden.

Der Erfindung liegt deshalb die Aufgabe zugrunde, ein beim Hersteller durchgeführtes Key-Agreement-Verfahren zum Hinterlegen von endgültigen individuellen Daten in einem Neben-Gerät bzw. -System, die einzig dem Hersteller bekannt sind, dahingehend zu erweitern, dass dasselbe Nebengerät bzw. -System beim Zulieferer bis zur Auslieferung an den Hersteller vorläufige individuelle Daten aufweist.

Die Aufgabe der Erfindung wird durch ein Verfahren zur Nachindividualisierung von bei mindestens einem Zulieferer gefertigten Neben-Geräten bzw. -Systemen durch den Hersteller mit den Merkmalen des Anspruchs 1 und ein Telekommunikationssystem mit den Merkmalen des Anspruchs 21, ein digitales Speichermedium nach Anspruch 22, ein Computerprogramm-Produkt nach Anspruch 23 und ein Computerprogramm nach Anspruch 24 oder 25 gelöst. Vorteilhafte Weiterbildungen der Erfindung sind in den abhängigen Ansprüchen aufgeführt.

Erfindungsgemäß wird jedes bei einem Zulieferer gefertigte Neben-Gerät bzw. -System mit vorläufigen individuellen Daten vorindividualisiert und nach der Auslieferung beim Hersteller mit endgültigen individuellen Daten nachindividualisiert.

Da der Hersteller nach Fertigstellung des Neben-Geräts bzw. -System die alleinige Hoheit über das Neben-Gerät bzw. -System besitzen will, dürfen die in einem geschützten - nichtflüchtigen - Speicherbereich des Neben-Geräts bzw. -Systems hinterlegten endgültigen individuellen Daten nur dem Hersteller bekannt sein. Hierzu werden über ein Key-Agreement-Verfahren zwischen einem beim Hersteller positionierten Haupt-Gerät bzw. - System und dem vom Zulieferer zum Hersteller ausgelieferten Neben-Gerät bzw. -System gegenseitig verschlüsselte, individuelle Daten ausgetauscht, aus denen das Haupt-Gerät bzw. -System und das Neben-Gerät bzw. - System jeweils identische Daten berechnen, die einzig dem Haupt-Gerät bzw. -System und dem Neben-Gerät bzw. -System und damit auch dem Hersteller bekannt sind und als endgültige individuelle Daten des jeweiligen Neben-Geräts bzw. -Systems dienen.

Die erfindungsgemäße Vorindividualisierung des Neben-Geräts bzw. -Systems kann durch individuelle Daten erfolgen, die der Hersteller dem Zulieferer zusendet, die der Zulieferer selbst erzeugt oder die durch das Neben-Gerät- bzw. -System selbst mittels eines im Neben-Gerät bzw. -System integrierten Zufallsgenerator generiert werden und anschließend in einen geschützten - nichtflüchtigen - Speicherbereich des Neben-Geräts bzw. - System abgelegt werden. Hierbei kann es sich um für den Zulieferer oder für einen Dritten geheime Daten oder um nicht-geheime Daten handeln.

Die individuellen Daten können entweder Schlüssel zum Codieren von Daten, Signaturschlüssel zur Verifikation der Herkunft von Daten oder um das Neben-Gerät bzw. -System kennzeichnende Daten bzw. geheime Systemdaten sein. Schließlich lassen sich die individuellen Daten des Neben-Geräts bzw. -Systems entweder in Geräte- bzw. Systemindividuelle Daten -z.B. Geräte- bzw. Systemkennzeichen - oder in Zulieferer-individuelle Daten - z.B. bei Beauftragung mehrerer Zulieferer durch den Hersteller - oder in Produkt-individuelle Daten - z.B. ein Produkt oder eine Produktgruppe kennzeichnende Daten - klassifizieren.

Als Key-Agreement-Verfahren bieten sich bevorzugt elliptische Kurven über endliche "Körper" oder Diffie-Hellmann-Algorithmen an. Bei allen Key-Agreement-Verfahren werden von den Kommunikationspartnern jeweils individuelle Daten ausgewählt und daraus mit Hilfe einer Key-Agreement-Funktion öffentliche Daten berechnet, die dem jeweils anderen Kommunikationspartner übertragen werden. Aus den vom jeweils anderen Kommunikationspartner empfangenen öffentlichen Daten und seinen eigenen individuellen Daten berechnet der jeweilige Kommunikationspartner unter nochmaliger Anwendung der Key-Agreement-Funktion gemeinsame Daten, die bei jedem Kommunikationspartner, wie sich zeigen läßt, identisch sind. Auf diese Weise ist es mit Hilfe eines Key-Agreement-Verfahrens möglich, bei vorheriger Vereinbarung der verwendeten Key-Agreement-Funktion und der zugehörigen Parameter zwischen den beiden Kommunikationspartnern, gemeinsame Daten zu erzeugen, die einzig den beiden Kommunikationspartnern bekannt sind.

Die erfindungsgemäße Anwendung des Key-Agreement-Verfahrens beim Hersteller zur Generierung von endgültigen individuellen Daten im Neben-Gerät bzw. -System, die einzig dem Hersteller respektive dem Haupt-Gerät bzw. - System und dem jeweiligen Neben-Gerät bzw. -System bekannt sind, setzt eine Auswahl von individuellen Daten im Haupt-Gerät bzw. -System voraus, die nur dem Hersteller und dem Haupt-Gerät bzw. -System bekannt sind. Als individuelle Daten des jeweiligen Neben-Geräts bzw. -Systems in der Nachindividualisierung werden erfindungsgemäß die in der Vorindividualisierung beim Zulieferer in einem geschützten - nichtflüchtigen - Speicherbereich des Neben-Geräts bzw. -System abgelegten individuellen Daten genutzt.

Der Datentransfer der individuellen Daten des Haupt-Geräts bzw. -Systems zum jeweiligen Neben-Gerät bzw. -System beim Hersteller erfolgt über einen zuliefererspezifischen Datencontainer. Dieser Container enthält zusätzlich eine zuliefererspezifische Signatur, die zu einem im jeweiligen Neben-Gerät bzw. -System in der Vorindividualisierung beim Zulieferer in den nichtflüchtigen Speicher des jeweiligen Neben-Geräts bzw. -Systems hinterlegten Signaturschlüssel korrespondiert und zur Verifizierung der korrekten Herkunft des zum Hersteller transportierten Neben-Geräts bzw. -Systems durch den Hersteller dient.

Erfindungsgemäß können die individuellen Daten des Haupt-Geräts -bzw. -System für alle Neben-Geräte bzw. -Systeme identisch sein, für jedes Neben-Gerät bzw. -System individuell oder für jedes beim gleichen Zulieferer gefertigten Neben-Geräts bzw. -Systems identisch ausgelegt sein. Auch die im geschützten Speicher des jeweiligen Neben-Geräts bzw. -Systems abgelegten endgültigen individuellen Daten können erfindungsgemäß sowohl für alle Neben-Geräte und -Systeme identisch, für jedes Neben-Gerät bzw. -System jeweils individuell oder für jedes beim gleichen Zulieferer hergestellten Neben-Geräts bzw. - Systems identisch ausgelegt sein.

Die vorläufigen individuellen wie auch die endgültigen individuellen Daten des Haupt-Geräts bzw. -Systems und jedes der Neben-Geräte bzw. -Systeme können erfindungsgemäß über eine scheinbar entropieerhöhende Funktion in modifizierte vorläufige wie auch modifizierte endgültige individuelle Daten gewandelt werden.

Eine Ausführungsform des erfindungsgemäßen Verfahrens zur Nachindividualisierung von bei mindestens einem Zulieferer gefertigten Neben-Geräten bzw. -Systemen durch den Hersteller sowie ein entsprechendes Telekommunikationssystem wird im folgenden unter Berücksichtigung der Zeichnung näher erläutert. In der Zeichnung zeigen:

Fig. 1     eine schematische Darstellung des erfindungsgemäßen Telekommunikationssystems zur Nachindividualisierung von bei mindestens einem Zulieferer gefertigten Neben-Geräten bzw. -Systemen durch den Hersteller,

Fig. 2     ein Flussdiagramm der Vorbereitungsphase des erfindungsgemäßen Verfahrens zur Nachindividualisierung von bei mindestens einem Zulieferer gefertigten Neben-Geräten bzw. -Systemen durch den Hersteller und

Fig. 3     ein Flussdiagramm der Key-Agreement-Phase des erfindungsgemäßen Verfahrens zur Nach-individualisierung von bei mindestens einem Zulieferer gefertigten Neben-Geräten bzw. -Systemen durch den Hersteller.

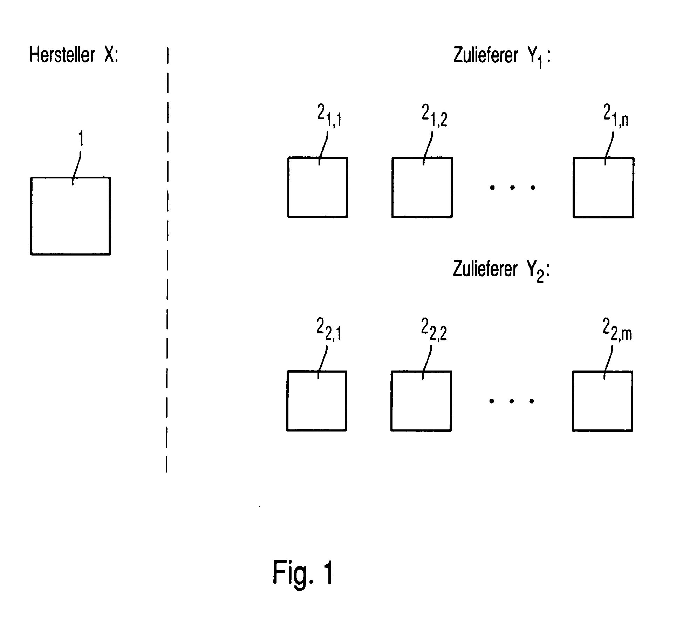

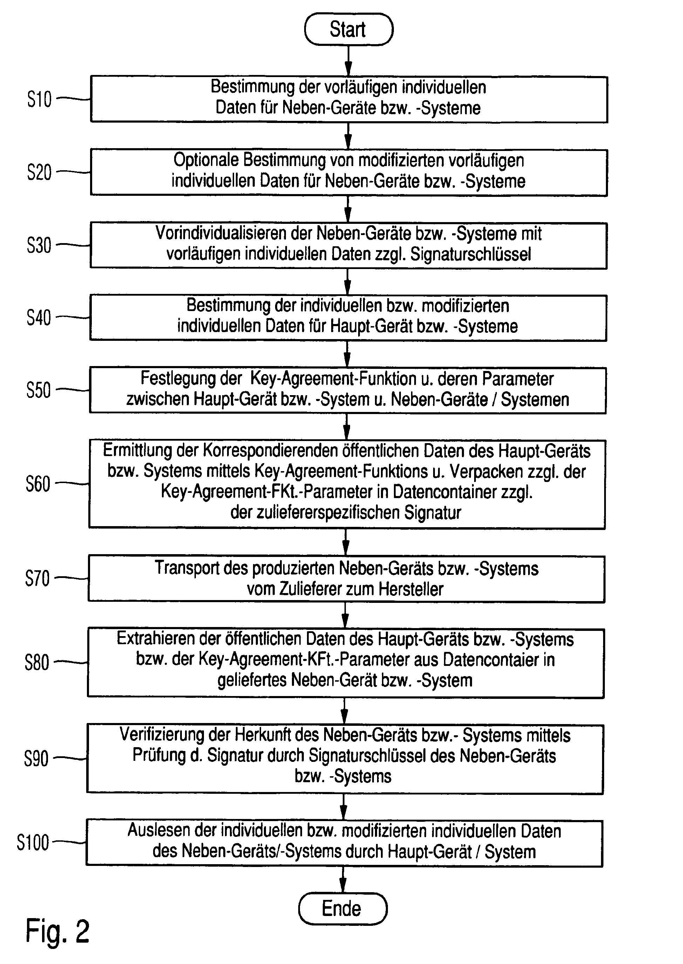

Aufbauend auf dem erfindungsgemäßen Telekommunikationssystem zur Nachindividualisierung von bei mindestens einem Zulieferer gefertigten Neben-Geräten bzw. -Systemen durch den Hersteller in Fig. 1 wird anhand von Fig. 2 bis Fig. 5 die Vorbereitungs- und Key-Agreement-Phase des erfindungsgemäßen Verfahrens zur Nachindividualisierung von bei mindestens einem Zulieferer gefertigten Neben-Geräten bzw. -Systemen durch den Hersteller beschrieben.

Das erfindungsgemäße Telekommunikationssystem besteht aus einem beim Hersteller X lokalisierten Haupt-Gerät bzw. - System 1 und aus mindestens einem beim Zulieferer $Y_1$ lokalisierten Neben-Gerät bzw. -System $2_{1,1}$, $2_{1,2}$, . . . . , $2_{1,n}$. Im Falle einer Beauftragung mehrerer Zulieferer $Y_1$, $Y_2$, ..., $Y_n$ durch den Hersteller X können zusätzliche Neben-Geräte bzw. -Systeme $2_{2,1}$, $2_{2,2}$,..., $2_{2,m}$ beim Zulieferer $Y_2$, wie in Fig. 1 dargestellt ist, bis Neben-Geräte bzw. -Systeme $2_{n,1}$, $2_{n,2}$, ... , $2_{n,n}$ beim Zulieferer $Y_n$ hinzukommen. Alle Haupt-Geräte bzw. -Systeme und Neben-Geräte bzw. -Systeme verfügen jeweils über einen nichtflüchtigen Speicher, beispielsweise einen Flash- oder EEPROM-Speicher, in denen die einzelnen Programm- und Parameterdaten der Applikations- und Systemsoftware wie auch die verschiedenen individuellen Daten schreibgeschützt abgespeichert sind. Insbesondere für die sicherheitsrelevanten Daten - Codierungsschlüssel, Signaturschlüssel, geheime Systemdaten - ist ein lese- und schreibgeschützter Speicher erforderlich.

In der Vorbereitungsphase des erfindungsgemäßen Verfahrens zur Nachindividualisierung von bei mindestens einem Zulieferer gefertigten Neben-Geräten bzw. -Systemen durch den Hersteller werden die vorläufigen individuellen Daten $N_{ind}$, $N_{ind1}$, $N_{ind2}$, ... , $N_{indn}$, $N_{ind1,1}$, $N_{ind1,2}$, ..., $N_{indn,n}$ des jeweiligen Neben-Gerätes bzw. -Systems $2_{1,1}$, $2_{1,2}$, .... $2_{n,n}$ bestimmt.

Bei den vorläufigen individuellen Daten $N_{ind}$, $N_{ind1}$, $N_{ind2}$, ..., $N_{indn}$, $N_{ind1,1}$, $N_{ind1,2}$,..., $N_{indn,n}$ kann es sich entweder um Codierungsschlüssel zum Entschlüsseln von Daten, die das jeweilige Neben-Gerät bzw. -System $2_{1,1}$, $2_{1,2}$, . . . , $2_{n,n}$ empfängt, oder um Signaturschlüssel, mit denen das jeweilige Neben-Gerät bzw. -System $2_{1,1}$, $2_{1,2}$, ... , $2_{n,n}$ die Herkunft von empfangenen Daten verifiziert, oder um kennzeichnende Daten - beispielsweise individuelle Gerätekennzeichen - handeln.

Die vorläufigen individuellen Daten $N_{ind}$, $N_{ind1}$, $N_{ind2}$, ... , $N_{indn}$, $N_{ind1,1}$, $N_{ind1,2}$, ..., $N_{indn,n}$ sind entweder für alle Neben-Geräte bzw. -Systeme $2_{1,1}$, $2_{1,2}$, .... $2_{n,n}$ identisch - vorläufige individuelle Daten $N_{ind}$ beispielsweise zur Kennzeichnung des Geräte- bzw. System-Typs - oder für alle Neben-Geräte bzw. -Systeme $2_{1,1}$, $2_{1,2}$, . . . , $2_{n,n}$' die beim gleichen Zulieferer $Y_1$, $Y_2$, . . . , $Y_n$ gefertigt werden, identisch - vorläufige individuelle Daten $N_{ind1}$, $N_{ind2}$, . . . , $N_{indn}$ beispielsweise zur Kennzeichnung des Fertigungsortes - oder für jedes Neben-Gerät bzw. -System $2_{1,1}$, $2_{1,2}$, ... , $2_{n,n}$ individuell - vorläufige individuelle Daten $N_{ind1,1}$, $N_{ind1,2}$, ..., $N_{indn,n}$ beispielsweise zur Kennzeichnung des individuellen Geräts bzw. Systems.

Die vorläufigen individuellen Daten $N_{ind}$, $N_{ind1}$, $N_{ind2}$, . . . , $N_{indn}$, $N_{ind1,1}$, $Nind_{1,2}$, . . . , $N_{indn,n}$ können entweder vom jeweiligen Zulieferer $Y_1$, $Y_2$, . . . , $Y_n$ ermittelt oder vom Hersteller X ermittelt und dem jeweiligen Zulieferer $Y_1$, $Y_2$, . . . , $Y_n$ übermittelt oder vom jeweiligen Neben-Gerät bzw. -System $2_{1,1}$, $2_{1,2}$, ... , $2_{n,n}$ selbst mittels eines im jeweiligen Neben-Gerät bzw. -System $2_{1,1}$, $2_{1,2}$, ... , $2_{n,n}$ integrierten Zufallsgenerators generiert werden.

Die vorläufigen individuellen Daten $N_{ind}$, $N_{ind1}$, $N_{ind2}$, ... , $N_{indn}$, $N_{ind1,1}$, $N_{ind1,2}$, ... , $N_{indn,n}$ können für den jeweiligen Zulieferer $Y_1$, $Y_2$,...,$Y_n$ nicht-geheim oder geheim gehalten sein. Werden die vorläufigen individuellen Daten $N_{ind}$, $N_{ind1}$, $N_{ind2}$, ... , $N_{indn}$, $N_{ind1,1}$, $N_{ind1,2}$, ... , $N_{indn,n}$ dem jeweiligen Zulieferer $Y_1$, $Y_2$, ... , $Y_n$ geheim gehalten, um eine Manipulation der vorläufigen individuellen Daten $N_{ind}$, $N_{ind1}$, $N_{ind2}$, ... , $N_{indn}$, $N_{ind1,1}$, $N_{ind1,2}$, ..., $N_{indn, n}$ durch den jeweiligen Zulieferer $Y_1$, $Y_2$,...,$Y_n$ zu verhindern, werden diese vom Hersteller X in einer dem jeweiligen Zulieferer $Y_1$, $Y_2$,..., $Y_n$ nicht bekannten Codierung verschlüsselt oder vom Zufallsgenerator des jeweiligen Neben-Geräts bzw. -System $2_{1,1}$, $2_{1,2}$, . . . ,$2_{n,n}$ in einen für den jeweiligen Zulieferer $Y_1$, $Y_2$, . . . , $Y_n$ lesegeschützten Speicherbereich des Neben-Geräts bzw. - Systems $2_{1,1}$, $2_{1,2}$, . . .,$2_{n,n}$ geschrieben.

Um die Sicherheit der vorläufigen individuellen Daten $N_{ind}$, $N_{ind1}$, $N_{ind2}$, . . . , $N_{indn}$, $N_{ind1,1}$, $N_{ind1,2}$ , . . ., $N_{indn,n}$ vor Manipulation zu gewährleisten, werden diese in darauffolgenden Verfahrensschritt S20 über eine scheinbar entropieerhöhende Funktion - beispielsweise über eine auf dem Hash-Algorithmus basierende scheinbar entropierhöhende Funktion - in modifizierte vorläufige individuelle Daten $N_{ind}{'}$, $N_{ind1}{'}$, $N_{ind2}{'}$, ..., $N_{indn}{'}$, $N_{ind1,1}{'}$, $N_{ind1,2}{'}$,..., $N_{indn,n}{'}$ gewandelt. Diese modifizierten vorläufigen individuellen Daten $N_{ind}{'}$, $N_{ind1}{'}$, $N_{ind2}{'}$, ..., $N_{indn}{'}$, $Nind_{1,1}{'}$, $Nind_{1,2}{'}$, ...,$N_{indn,n}{'}$ weisen gegenüber den individuellen Daten $N_{ind}$, $N_{ind1}$, $N_{ind2}$, ...,$N_{indn}$, $N_{ind1,1}$, $H_{ind1,2}$,...., $N_{indn,n}$ eine scheinbar höhere Entropie - i.a. eine höhere Bitanzahl - auf.

Im darauf folgenden Verfahrensschritt S30 wird jedes einzelne Neben-Gerät bzw. -System $2_{1,1}$, $2_{1,2}$, . . . , $2_{n,n}$ durch Abspeichern der vorläufigen individuellen Daten $N_{ind}$, $N_{ind1}$, $N_{ind2}$, . . . , $N_{indn}$ , $N_{ind1,1}$, $N_{ind1,2}$, . . . ,$N_{indn,n}$ bzw. modifizierten vorläufigen individuellen Daten $N_{ind}{'}$ ,$N_{ind1}{'}$ ,$N_{ind2}{'}$ , . . .$N_{indn}{'}$, $N_{ind1,1}{'}$, $N_{ind1,2}{'}$,..., $N_{indn,n}{'}$ in einem nicht-flüchtigen Speicherbereich - beispielsweise Flash-EPROM - des jeweiligen Neben-Geräts bzw. -Systems $2_{1,1}$, $2_{1,2}$,..., $2_{n,n}$ vorindividualisiert. Zusätzlich wird im nichtflüchtigen Speicherbereich des jeweiligen Neben-Geräts bzw. -Systems $2_{1,1}$, $2_{1,2}$,... , $2_{n,n}$ ein vom Hersteller X dem jeweiligen Zulieferer $Y_1$, $Y_2$,..., $Y_n$ übermittelter Signatur-Schlüssel zur Überprüfung der korrekten Herkunft des vom jeweiligen Zulieferer $Y_1$, $Y_2$, . . . , $Y_n$ zum Hersteller X transportierten Neben-Geräts bzw. -Systems $2_{1,1}$,$2_{1,2}$, . . . ,$2_{n,n}$ abgespeichert.

Der Verfahrensschritt S40 beinhaltet die Festlegung der zum Haupt-Gerät bzw. -System 1 gehörigen individuellen Daten $H_{ind}$ , $H_{ind1}$, $H_{ind2}$,..., $H_{indn}$, $H_{ind1,1}$, $H_{ind1,2}$, ..., $H_{indn,n}$ durch den Hersteller X. Die individuellen Daten $H_{ind}$, $H_{ind1}$, $H_{ind2}$, ... , $H_{indn}$, $H_{ind1,1}$, $H_{ind1,1}$, $H_{ind1,2}$,...., $H_{indn,n}$ des Haupt-Geräts bzw. - Systems 1 können entweder für alle Neben-Geräte bzw. - Systeme $2_{1,1}$, $2_{1,2}$, ... , $2_{n,n}$ identisch - $H_{ind}$ - oder für alle beim gleichen Zulieferer $Y_1$, $Y_2$, ..., $Y_n$ gefertigten Neben-Geräte bzw. -Systeme $2_{1,1}$, $2_{1,2}$, ... , $2_{n,n}$ identisch - $H_{ind1}$, $H_{ind2}$, ...., $H_{indn}$- oder für jedes Neben-Gerät bzw. -System $2_{1,1}$, $2_{1,2}$, ... , $2_{n,n}$-$H_{ind1,1'}$ $H_{ind1,2}$ ... , $H_{indn,n}$ - individuell sein. Zur Erhöhung der Sicherheit der individuellen Daten $H_{ind}$,$H_{ind1}$,$H_{ind2'}$ ... , $H_{indn}$ $H_{ind1,1'}$ $H_{ind1,2'}$ ... , $H_{indn,n}$ des Haupt-Geräts bzw. -Systems können diese über eine scheinbar entropieerhöhende Funktion in modifizierte individuelle Daten $H_{ind}{'}$ , $H_{ind1}{'}$ ,$H_{ind2'}$,...., $H_{indn}{'}$ ,$H_{ind1,1}{'}$, $H_{ind1,2}{'}$, ..., $H_{indn,n}{'}$ mit höherer Sicherheit gegenüber Manipulation durch Dritte gewandelt werden. Die individuellen Daten $H_{ind}$, $H_{ind1}$, $H_{ind2}$,...$H_{indn}$, $H_{ind1,1}$, $H_{ind1,2}$, ... , $H_{indn,n}$ bzw. die modifizierten individuellen Daten $H_{ind}{'}$, $H_{ind1}{'}$, $H_{ind2}{'}$, ...,$H_{indn}{'}$, $H_{ind1,1}{'}$, $H_{ind1,2}{'}$, ... , $H_{indn,n}{'}$ des Haupt-Geräts bzw. - Systems 1 werden in Verfahrensschritt S40 in einen nichtflüchtigen Speicherbereich des Haupt-Geräts bzw. - Systems 1 abgespeichert.

Im nächsten Verfahrensschritt S50 wird vom Hersteller X das zwischen dem Haupt-Gerät bzw. -System 1 und den Neben-Geräten bzw. -Systemen $2_{1,1}$, $2_{1,2}$, ... , $2_{n,n}$ verwendete Key-Agreement-Verfahren festgelegt. Beispielhaft wird im folgenden das Diffie-Hellmann-Verfahren und elliptische Kurven über endliche "Körper" beschrieben. Aber auch andere Key-Agreement-Verfahren wie beispielsweise solche, die nach Braid Groups basieren können, zum Einsatz kommen.

Neben der Festlegung des jeweiligen Key-Agreement-Verfahren erfolgt in Verfahrensschritt S50 die Festlegung der verfahrensspezifischen Parameter. Für den Diffie-Hellmann-Algorithmus ist der Modulus m und der Generator g zu bestimmen, wobei für den Modulus m eine Primzahl größer 2 und für den Generator g eine geeignete Primitivwurzel zum Modulus m zu wählen ist. Für elliptischen Kurven r über endliche "Körper" K ist ein Basispunkt b auf der elliptischen Kurve $\Gamma$ festzulegen. Die verfahrensspezifischen Parameter sind jeweils im nichtflüchtigen Speicherbereich des Haupt-Gerätes bzw. -Systems 1 abzuspeichern.

Im nachfolgenden Verfahrensschritt S50 wird mit dem in Verfahrensschritt S40 festgelegten Key-Agreement-Verfahren der zu den individuellen Daten $H_{ind}$, $H_{ind1}$, $H_{ind2}$, ..., $H_{indn}$, $H_{ind1,1}$, $H_{ind1,2}$, ... , $H_{indn,n}$ bzw. modifizierten individuellen Daten $H_{ind}{'}$, $H_{ind1}{'}$, $H_{ind2'}$, ..., $H_{indn}{'}$, $H_{ind1,1}{'}$, $H_{ind1,2}{'}$, ... , $H_{indn,n}{'}$ des Haupt-Geräts bzw. -Systems 1 die korrespondierenden öffentlichen Daten $H_{öff}$, $H_{öff1}$, $H_{öff2}$, ..., $H_{öffn}$, $H_{öff1,1}$, $H_{öff1,2}$, ... , $H_{öffn,n}$ bzw. $H_{öff}{'}$, $H_{öff1}{'}$, $H_{öff2'}$, ... , $H_{öffn}{'}$, $H_{öff1,1}{'}$, $H_{öff1,2}{'}$, ... , $H_{öffn,n}{'}$ des Haupt-Geräts bzw. -Systems 1 berechnet.

Wird das Diffie-Hellmann-Verfahren ausgewählt, so berechnen sich die öffentlichen bzw. modifizierten öffentlichen Daten $H_{öff}$, $H_{öff1}$, $H_{öff2}$,..., $H_{öffn}$, $H_{öff1,1}$, $Höff_{1,2}$,..., $H_{öffn,n}$ bzw. $H_{öff}{'}$, $H_{öff1}{'}$, $H_{öff2'}$,...., $H_{öffn}{'}$, $H_{öff1,1}{'}$, $H_{öff1,2}{'}$,...., $H_{öffn,n}{'}$ des Haupt-Geräts bzw. -Systems 1 unter Anwendung der modularen Exponentiation aus den individuellen bzw. modifizierten individuellen Daten $H_{ind}$, $H_{ind1,1}$, $H_{ind1}$, $H_{ind2}$,..., $H_{indn}$, $H_{ind1,2}$,...., $H_{indn,n}$ bzw. $H_{ind}{'}$, $H_{ind1}{'}$, $H_{ind2'}$,...,$H_{indn}{'}$, $H_{ind1,1}{'}$, $H_{ind1,2}{'}$, ..., $H_{indn,n}{'}$ des Haupt-Geräts bzw. -Systems 1 sowie dem Modulus m und dem Generator g gemäß Gleichung (1a):

$$H_{\ddot{O}f\!f} = g^{H_{ind}} \bmod m \qquad\qquad\qquad (1a)$$

Werden elliptischen Kurven r über endliche "Körper" K ausgewählt, so berechnen sich die öffentlichen bzw. modifizierten öffentlichen Daten $H_{öff}$, $H_{öff1}$, $H_{öff2}$, ..., $H_{öffn}$ $H_{öff1,1'}$, $H_{öff1,2'}$, ..., $H_{öffn,n}$ bzw. $H_{öff}{'}$, $H_{öff1}{'}$, $H_{öff2'}$,...., $H_{öffn}{'}$, $H_{öff1,1}{'}$, $H_{öff1,2}{'}$,...,$H_{öffn,n}{'}$ des Haupt-Geräts bzw. -Systems 1 über eine algebraische Funktion $X_H$ aus den individuellen bzw. modifizierten individuellen Daten $H_{ind}$, $H_{ind1}$, $H_{ind2}$, ..., $H_{indn}$, $H_{ind1,1}$, $H_{ind1,2}$, ..., $H_{indn,n}$ bzw. $H_{ind}{'}$, $H_{ind1}{'}$, $H_{ind2'}$, ..., $H_{indn}{'}$ $H_{ind1,1}{'}$, $H_{ind1,2}{'}$,...,$H_{indn,n}{'}$ des Haupt-Geräts bzw. -Systems 1 ausgehend von einem Basispunkt b einer ausgewählten elliptischen Kurve r:

$$H_{\text{öff}} := X_H(H_{\text{ind}}) := \sum_{i=1}^{H_{\text{ind}}} b = H_{\text{ind}} \cdot b \qquad\qquad (1b)$$

Die öffentlichen Daten $H_{\text{öff}}$ des Haupt-Geräts bzw. -Systems 1 stellen dabei einen Punkt der ausgewählten elliptischen Kurve $\Gamma$ dar, der sich durch $H_{\text{ind}}$-fache Anwendung einer algebraischen Funktion $X_H$ - einer Addition von Kurvenpunkten - aus dem Basispunkt - ebenfalls ein Punkt der elliptischen Kurve r - ergibt, wobei $H_{\text{ind}}$ ein Element eines endlichen Körpers -beispielsweise eines Restklassenkörpers modn oder eines Galoiskörpers $IF_{2**n}$ - ist. Da ein Dritter selbst bei Kenntnis der elliptischen Kurve $\Gamma$ aus b und $H_{\text{öff}}$ nicht $H_{\text{ind}}$ berechnen kann und da die individuellen Daten $H_{\text{ind}}$ sehr hohe Werte aufweisen, kann ein Dritter nach heutigem Wissensstand aus der Kenntnis des Basispunktes b und der berechneten öffentlichen Daten $H_{\text{öff}}$ nicht auf die individuellen Daten $H_{\text{ind}}$ schließen. Daher gilt das Verfahren als sicher.

Nach Berechnung der öffentlichen bzw. der modifizierten öffentlichen Daten $H_{\text{öff}}$, $H_{\text{öff1}}$, $H_{\text{öff2}}$, ... , $H_{\text{öffn}}$, $H_{\text{öff1.1}}$, $H_{\text{öff1,2}}$,... , $H_{\text{öffn,n}}$ bzw. $H_{\text{öff}}'$ $H_{\text{öff1}}$, $H_{\text{öff2}}'$,... , $H_{\text{öffn}}'$, $H_{\text{öff1,1}}'$, $H_{\text{öff1,2}}'$, ... , $H_{\text{öffn,n}}'$ des Haupt-Geräts bzw. -Systems 1 werden diese innerhalb des Verfahrensschritts S60 vom Haupt-Gerät bzw. -System 1 zusammen mit den verfahrensspezifischen Parametern Modulus m und Generator g beim Diffie-Hellmann-Verfahren bzw. Basispunkt b bei elliptischen Kurven über endliche Körper auf einen zuliefererspezifischen Datencontainer $Z_1, Z_2,...,Z_n$ gepackt und mit der zuliefererspezifischen Signatur chiffriert.

Nach erfolgreicher Herstellung des jeweiligen Neben-Gerätes bzw. -Systems $2_{1,1}$, $2_{1,2}$, ... , $2_{n,n}$ - Hardware-Produktion, Software-Integration sowie Abspeichern der vorläufigen individuellen bzw. modifizierten vorläufigen individuellen Daten $N_{\text{ind}}$, $N_{\text{ind1}}$, $Ni_{\text{nd2}}$, ... , $N_{\text{indn}}$, $N_{\text{ind1,1}}$, $N_{\text{ind1,2}}$, ...,$N_{\text{indn,n}}$ bzw. $N_{\text{ind}}'$,$N_{\text{ind1}}'$,$N_{\text{ind2}}'$, ... ,$N_{\text{indn}}'$,$N_{\text{ind1,1}}'$, $N_{\text{ind1,2}}'$, ... ,$N_{\text{indn,n}}'$ sowie des zuliefererspezifischen Signatur-Schlüssels - wird das jeweilige Neben-Gerät bzw. -System $2_{1,1}$, $2_{1,2}$, ... , $2_{n,n}$ vom jeweiligen Zulieferer $Y_1,Y_2,...,Y_n$ in Verfahrensschritt S70 zum Hersteller X transportiert.

In Verfahrensschritt S80 werden aus dem zuliefererspezifischen Datencontainer $Z_1,Z_2,...,Z_n$ die öffentlichen bzw. modifizierten öffentlichen Daten $H_{\text{öff}}$, $H_{\text{öff1}}$, $H_{\text{öff2}}$, ... , $H_{\text{öffn}}$, $H_{\text{öff1,1}}$, $H_{\text{öff1,2}}$, ... , $H_{\text{öffn,n}}$ bzw. $H_{\text{öff}}'$, $H_{\text{öff1}}'$, $H_{\text{öff2}}'$, ... , $H_{\text{öffn}}'$, $H_{\text{öff1,1}}'$, $H_{\text{öff1,2}}'$, ... , $H_{\text{öffn,n}}'$ des Haupt-Geräts bzw. - Systems 1, die verfahrensspezifischen Parameter der jeweils ausgewählten Key-Agreement-Funktion und die zuliefererspezifische Signatur extrahiert und in den nichtflüchtigen Speicherbereich des zum Hersteller X jeweils transportierten Neben-Gerät bzw. -System $2_{1,1},2_{1,2}$, . . . , $2_{n,n}$ abgespeichert.

Im Verfahrensschritt S90 wird mit dem im Speicherbereich des vom jeweiligen Zulieferer $Y_1,Y_2$, . . . ,$Y_n$ zum Hersteller X transportierten Neben-Geräts bzw. -Systems $2_{1,1}$, $2_{1,2}$, . . . , $2_{n,n}$ abgespeicherten zuliefererspezifischen Signatur-Schlüssels die zuliefererspezifische Signatur aus dem zuliefererspezifischen Datencontainer $Z_1$, $Z_2$,..., $Z_n$ verifiziert. Ist die zuliefererspezifische Signatur des zuliefererspezifischen Datencontainers $Z_1$, $Z_2$,...,$Z_n$ mit Hilfe des Signatur-Schlüssels positiv verifiziert worden, so ist das jeweils zum Hersteller X transportierte Neben-Gerät bzw. - System $2_{1,1},2_{1,2},...,2_{n,n}$ ein tatsächlich vom Hersteller X bei einem seiner Zulieferer $Y_1$, $Y_2$, ... , $Y_n$ gefertigtes Neben-Gerät bzw. -System $2_{1,1}$, $2_{1,2}$, ... ,$2_{n,n}$ und kein fälschlicherweise von einem Zulieferer $Y_{n+1}$ geliefertes Neben-Gerät bzw. -System $2_{n+1,1}$, $2_{n+1,2}$, ... , $2_{n+1,n}$, der vom Hersteller X mit der Fertigung gar nicht beauftragt wurde.

Schließlich wird im letzten Verfahrensschritt S100 der Vorbereitungsphase des erfindungsgemäßen Verfahren zur Nachindividualisierung von bei mindestens einem Zulieferer gefertigten Neben-Geräten bzw. -Systemen durch den Hersteller aus dem Speicherbereich des vom jeweiligen Zulieferer $Y_1,Y_2,...,Y_n$ zum Hersteller X transportierten Neben-Geräts bzw. -Systems $2_{1,1},2_{1,2},...,2_{n,n}$ die abgespeicherten vorläufigen individuellen bzw. modifizierten vorläufigen individuellen Daten $N_{\text{ind}}$, $N_{\text{ind1}}$, $N_{\text{ind2}}$, ... , $N_{\text{indn}}$, $N_{\text{ind1,1}}$, $N_{\text{ind1, 2}}$, ... , $N_{\text{indn, n}}$ bzw. $N_{\text{ind}}'$ $N_{\text{ind1}}'$, $N_{\text{ind2}}'$, ... , $N_{\text{indn}}'$, $N_{\text{ind1,1}}'$, $N_{\text{ind1,2}}'$, ... , $N_{\text{indn,n}}'$ ausgelesen und im nichtflüchtigen Speicherbereich des Haupt-Geräts bzw. -Systems 1 abgespeichert.

Mit Verfahrensschritt S100 ist die Vorbereitungsphase des erfindungsgemäßen Verfahren zur Nachindividualisierung von bei mindestens einem Zulieferer gefertigten Neben-Geräten bzw. -Systemen durch den Hersteller gemäß Fig. 2 abgeschlossen.

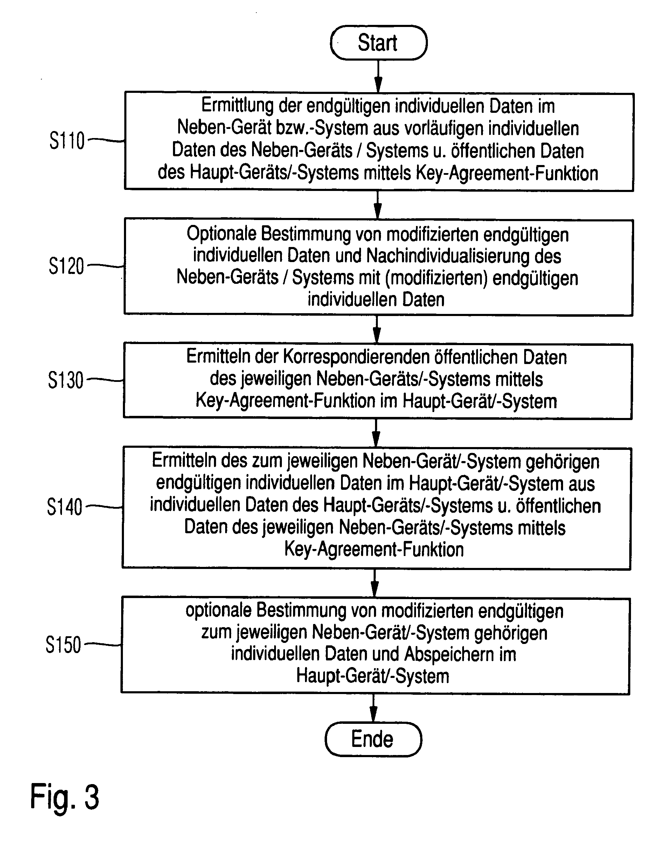

In der Key-Agreementphase des erfindungsgemäßen Verfahren zur Nachindividualisierung von bei mindestens einem Zulieferer gefertigten Neben-Geräten bzw. -Systemen durch den Hersteller gem. Fig. 3 werden in Verfahrensschritt S110 im beim Hersteller X befindlichen Neben-Gerät bzw. - System $2_{1,1},2_{1,2}$, . . . , $2_{n,n}$ aus den vorläufigen individuellen Daten bzw. den modifizierten vorläufigen individuellen Daten $N_{\text{ind}}$, $N_{\text{ind1}}$, $N_{\text{ind2}}$, ... , $N_{\text{indn}}$, $N_{\text{ind1,1}}$, $N_{\text{ind1,2}}$, ... , $N_{\text{indn,n}}$ bzw. $N_{\text{ind}}'$, $N_{\text{ind1}}'$, $N_{\text{ind2}}'$, ... , $N_{\text{indn}}'$, $N_{\text{ind1,1}}'$, $N_{\text{ind1,2}}'$, ... , $N_{\text{indn,n}}'$ des Neben-Gerätes bzw. -Systems $2_{1,1}$, $2_{1,2}$, ... , $2_{n,n}$ und den öffentlichen bzw. modifizierten öffentlichen Daten $H_{\text{öff}}$ , $H_{\text{öff1}}$, $H_{\text{öff2}}$, ... , $H_{\text{öffn}}$ $H_{\text{öff1,1}}$, $H_{\text{öff1,2}}$, ... , $H_{\text{öffn,n}}$ bzw. $H_{\text{öff}}'$, $H_{\text{öff1}}'$, $H_{\text{öff2}}'$ , ... , $H_{\text{öffn}}'$, $H_{\text{öff1,1}}'$, $H_{\text{öff1,2}}'$, ... , $H_{\text{öffn,n}}'$ des Haupt-Gerätes bzw. -Systems 1 bei als Key-Agreement-Verfahren ausgewählten Diffie-Hellmann-Verfahren mit Hilfe der modularen Exponentiation gemäß Gleichung (2a) die endgültigen individuellen Daten $d,d_1,d_2,...,d_n,d_{1,1},d_{1,2}, ...,d_{n,n}$ berechnet. Diese endgültigen individuellen Daten des jeweiligen Nebengeräts bzw. - Systems $2_{1,1}$, $2_{1,2}$, ... , $2_{n,n}$, sind entweder nur dem Hersteller X, dem Haupt-Gerät bzw. -System 1 und dem jeweiligen Neben-Gerät bzw. -System $2_{1,1}$, $2_{1,2}$, ... , $2_{n,n}$ - $d_{1,1}$, $d_{1,2}$, ... , $d_{n,n}$ - oder nur dem Hersteller X, dem Haupt-Gerät bzw. -System 1 und den beim gleichen Zulieferer $Y_1$, $Y_2$, ... , $Y_n$ gefertigten Neben-Gerät bzw. -System $2_{1,1}, 2_{1,2}$'...' $2_{n,n}$ - $d_1$, $d_2$, ... , $d_n$ - oder nur dem Hersteller X, dem Haupt-Gerät bzw -System 1 und allen Neben-Geräten bzw. -System $2_{1,1}$, $2_{1,2}$, ... , $2_{n,n}$ - d - bekannt.

$$d = H_{\ddot{O}ff}^{N_{ind}} \bmod m = g^{H_{ind} \cdot N_{ind}} \bmod m \qquad (2a)$$

Analog ergeben sich bei Anwendung von elliptischen Kurven $\Gamma$ über endliche "Körper" K die endgültigen individuellen Daten d, $d_1$, $d_2$, ... , $d_n$, $d_{1,1}$, $d_{1,2}$, ... , $d_{n,n}$ aus den vorläufigen individuellen Daten bzw. den modifizierten vorläufigen individuellen Daten $N_{ind}$, $N_{ind1}$, $N_{ind2}$, ... , $N_{indn}$, $N_{ind1,1}$, $N_{ind1,2}$, ... , $N_{indn,n}$ bzw. $N_{ind}'$, $N_{ind1}'$, $N_{ind2}'$, ... , $N_{indn}'$, $N_{ind1,1}'$, $N_{ind1.2}'$, ... , $N_{indn,n}'$ des Neben-Gerätes bzw. -Systems $2_{1,1}$, $2_{1,2}$, ... , $2_{n,n}$ und den öffentlichen bzw. modifizierten öffentlichen Daten $H_{\ddot{o}ff}$, $H_{\ddot{o}ff1}$, $H_{\ddot{o}ff2}$, ... , $H_{\ddot{o}ffn}$, $H_{\ddot{o}ff1,1}$, $H_{\ddot{o}ff1,2}$, ... , $H_{\ddot{o}ffn,n}$ bzw. $H_{\ddot{o}ff}'$, $H_{\ddot{o}ff1}'$, $H_{\ddot{o}ff2}'$, ..., $H_{\ddot{o}ffn}'$, $H_{\ddot{o}ff1,1}'$, $H_{\ddot{o}ff1,2}'$, ... , $H_{\ddot{o}ffn,n}'$ des Haupt-Gerätes bzw. - Systems 1 mit Hilfe der Funktion $f_H$ gemäß Gleichung (2b):

$$d := f_H(H_{\ddot{O}ff} N_{ind}) := H_{\ddot{O}ff} N_{ind} \qquad (2b)$$

Während $H_{\ddot{o}ff}$ ein Punkt auf der elliptischen Kurve $\Gamma$ darstellt, ist $N_{ind}$ ein Element des endlichen "Körpers" K. Da ein Dritter selbst bei Kenntnis der elliptischen Kurve $\Gamma$ aus $H_{\ddot{o}ff}$ und $d$ nicht $N_{ind}$ berechnen kann, sind ihm die endgültigen individuellen Daten d, $d_1$, $d_2$, ... ,$d_n$, $d_{1,1}$, $d_{1,2}$, ... , $d_{n,n}$ des jeweiligen Neben-Geräts bzw. -Systems $2_{1,1}$, $2_{1,2}$, ... , $2_{n,n}$ als $N_{ind}$-fache Anwendung einer algebraischen Funktion - einer Addition von Kurvenpunkten - auf die öffentlichen bzw. modifizierten öffentlichen Daten $H_{\ddot{o}ff}$, $H_{\ddot{o}ff1}$, $H_{\ddot{o}ff2}$, ... , $H_{\ddot{o}ffn}$, $H_{\ddot{o}ff1,1}$, $H_{\ddot{o}ff1,2}$, ... ,$H_{\ddot{o}ffn,n}$ bzw. $H_{\ddot{o}ff}'$, $H_{\ddot{o}ff1}'$, $H_{\ddot{o}ff2}'$, ... , $H_{\ddot{o}ffn}'$, $H_{\ddot{o}ff1,1}'$, $H_{\ddot{o}ff1,2}'$, ... ,$H_{\ddot{o}ffn,n}'$ des Haupt-Gerätes bzw. -Systems 1 nicht erschließbar.

Im darauf folgenden Verfahrensschritt S120 werden optional die gemäß Gleichung (2a) bzw. (2b) berechneten endgültigen individuellen Daten d, $d_1$, $d_2$, ... , $d_n$, $d_{1,1}$, $d_{1,2}$, ... ,$d_{n,n}$ des jeweiligen Neben-Geräts bzw. -Systems $2_{1,1}$, $2_{1,2}$, .... $2_{n,n}$ über eine scheinbar entropieerhöhende Funktion in modifizierte endgültige individuelle Daten d', $d_1'$,$d_2'$, ... , $d_n'$, $d_{1,1}'$, $d_{1,2}'$, ... , $d_{n,n}'$ mit einer höheren Sicherheit gegenüber Manipulationen durch Dritte gewandelt. Das jeweilige Neben-Gerät bzw. -System $2_{1,1}$, $2_{1,2}$, ... , $2_{n,n}$ wird daraufhin im Verfahrensschritt S110 durch Abspeicherung der endgültigen individuellen bzw. der modifizierten endgültigen individuellen Daten d, $d_1$, $d_2$, ... , $d_n$, $d_{1,1}$, $d_{1,2}$, ... , $d_{n,n}$ bzw. d', $d_1'$, $d_2'$, ... , $d_n'$, $d_{1,1}'$, $d_{1,2}'$, ... , $d_{n,n}'$ im nichtflüchtigen Speicherbereich des jeweiligen Neben-Gerätes bzw. -Systems $2_{1,1}, 2_{1,2}'$ ... , $2_{n,n}$ nachindividualisiert.

In Verfahrensschritt S130 berechnet das Haupt-Gerät bzw. - System 1 die öffentlichen bzw. modifizierten öffentlichen Daten $N_{\ddot{o}ff}$, $N_{\ddot{o}ff1}$, $N_{\ddot{o}ff2}$, ... , $N_{\ddot{o}ffn}$, $N_{\ddot{o}ff1,1}$, $N_{\ddot{o}ff1,2}$, ... , $N_{\ddot{o}ffn,n}$ bzw. $N_{\ddot{o}ff}'$, $N_{\ddot{o}ff1}'$, $N_{\ddot{o}ff2}'$, ... ,$N\ddot{o}_{ffn}'$, $N_{\ddot{o}ff1,1}'$, $N_{\ddot{o}ff1,2}'$, ... ,$N_{\ddot{o}ffn,n}'$ des jeweiligen Neben-Gerätes bzw. -Systems $2_{1,1}$, $2_{1,2}$, ... , $2_{n,n}$ bei Auswahl des Diffie-Hellmann-Verfahrens als Key-Agreement-Verfahren unter Anwendung der modularen Exponentiation gemäß Gleichung (3a) aus den vorläufigen individuellen bzw. den modifizierten vorläufigen individuellen Daten $N_{ind}$, $N_{ind1}$, $N_{ind2}$, ... , $N_{indn}$, $N_{ind1,1}$, $N_{ind1,2}$, ... , $N_{indn,n}$ bzw. $N_{ind}'$, $N_{ind1}'$, $N_{ind2}'$, ... , $N_{indn}'$, $N_{ind1,1}'$, $N_{ind1,2}'$, ... , $N_{indn,n}'$ des jeweiligen zum Hersteller X transportierten Neben-Gerätes bzw. -Systems $2_{1,1}, 2_{1,2}$, ... , $2_{n,n}$ :

$$N_{\ddot{O}ff} = g^{N_{ind}} \bmod m \qquad (3a)$$

Analog berechnet in Verfahrensschritt S130 das Haupt-Gerät bzw. -System 1 die öffentlichen bzw. modifizierten öffentlichen Daten $N_{\ddot{o}ff}$, $N_{\ddot{o}ff1}$, $N_{\ddot{o}ff2}$, ... ,$N_{\ddot{o}ffn}$, $N_{\ddot{o}ff1,1}$, $N_{\ddot{o}ff1,2}$, ... , $N_{\ddot{o}ffn,n}$ bzw. $N_{\ddot{o}ff}'$, $N_{\ddot{o}ff1}'$, $N_{\ddot{o}ff2}'$, ... , $N_{\ddot{o}ffn}'$, $N_{\ddot{o}ff1,1}'$, $N_{\ddot{o}ff1,2}'$, ... , $N_{\ddot{o}ffn,n}'$ des jeweiligen Neben-Gerätes bzw. -Systems $2_{1,1}, 2_{1,2}, \ldots, 2_{n,n}$ bei Auswahl von elliptischen Kurven $\Gamma$ über endliche Körper K als Key-Agreement-Verfahren unter Anwendung der Funktion $X_N$ gemäß Gleichung (3b) aus den vorläufigen individuellen bzw. den modifizierten vorläufigen individuellen Daten $N_{ind}$, $N_{ind1}$, $N_{ind2}$, ... , $N_{indn}$, $N_{ind1,1}$, $N_{ind1,2}$, ... , $N_{indn,n}$ bzw. $N_{ind}'$, $N_{ind1}'$, $N_{ind2}$ ', ... , $N_{indn}'$, $N_{ind1,1}'$, $N_{ind1,2}'$, ... , $N_{indn,n}'$ des jeweiligen zum Hersteller X transportierten Neben-Gerätes bzw. -Systems $2_{1,1}$, $2_{1,2}$, ... ,$2_{n,n}$ :

$$N_{\ddot{o}ff} := X_N(N_{ind}) := N_{ind} b \qquad (3b)$$

Anschließend wird in Verfahrensschritt S140 vom Haupt-Gerät bzw. -System 1 aus individuellen bzw. modifizierten individuellen Daten $H_{ind}$, $H_{ind1}$, $H_{ind2}$, ... , $H_{indn}$, $H_{ind1,1}$, $H_{ind1,2}$, ..., $H_{indn,n}$ bzw. $H_{ind}$', $H_{ind1}$', $H_{ind2}$' , ... , $H_{indn}$', $H_{ind1,1}$', $H_{ind1,2}$',...., $H_{indn,n}$' des Haupt-Gerätes bzw. -Systems 1 und den öffentlichen bzw. modifizierten öffentlichen Daten $N_{öff}$, $N_{öff1}$, $N_{öff2}$, ... , $N_{öffn}$, $N_{öff1,1}$, $N_{öff1,2}$, ..., $N_{öffn,n}$ bzw. $N_{öff}$' , $N_{öff1}$' , $N_{öff2}$' , ... , $N_{öffn}$' , $N_{öff1,1}$' , $N_{öff1,2}$' , ... , $N_{öffn,n}$' des jeweiligen zum Hersteller X transportierten Neben-Gerätes bzw. -Systems $2_{1,1}$,$2_{1,2}$, ... , $2_{n,n}$ bei Auswahl des Diffie-Hellmann-Verfahrens als Key-Agreement-Verfahren unter Anwendung der modularen Exponentiation gemäß Gleichung (4a) die endgültigen individuellen Daten d, $d_1$, $d_2$,. . . , $d_n$, $d_{1,1}$, $d_{1,2}$, . . . , $d_{n,n}$, welche zum jeweiligen Neben-Gerät bzw. -System $2_{1,1}$,$2_{1,2}$, . . . , $2_{n,n}$ gehören und im Haupt-Gerät bzw. -System 1 abgespeichert werden, berechnet:

$$ d := N_{Öff}^{H_{ind}} \bmod m := g^{H_{ind} \cdot N_{ind}} \bmod m \qquad (4a) $$

Analog wird vom Haupt-Gerät bzw. -System 1 in Verfahrensschritt S140 aus den individuellen bzw. den modifizierten individuellen Daten $H_{ind}$, $H_{ind1}$, $H_{ind2}$, ... , $H_{indn}$, $H_{ind1,1}$, $Hind_{1,2}$, ... , $H_{indn,n}$ bzw. $H_{ind}$' , $H_{ind1}$' , $H_{ind2}$' , ... , $H_{indn}$' , $H_{ind1,1}$' , $H_{ind1,2}$ ',. . . $H_{indn,n}$' des Haupt-Gerätes bzw. -Systems 1 und den öffentlichen bzw. modifizierten öffentlichen Daten $N_{öff}$, $N_{öff1}$, $N_{öff2}$, ... , $N_{öffn}$, $N_{öff1,1}$, $N_{öff1,2}$, ... ,$N_{öffn,n}$ bzw. $N_{öff}$', $N_{öff1}$', $N_{öff2}$', ... ,$N_{öffn}$', $N_{öff1,1}$', $N_{öff1,2}$', ... ,$Nöff_{n,n}$' des jeweiligen zum Hersteller X transportierten Neben-Gerätes bzw. -Systems $2_{1,11}$$2_{1,2}$, . . . ,$2_{n,n}$ bei Auswahl von elliptischen Kurven $\Gamma$ über endliche Körper K als Key-Agreement-Verfahren unter Anwendung der Funktion $f_N$ gemäß Gleichung (4b) die endgültigen individuellen Daten d, $d_1$, $d_2$, ... , $d_n$, $d_{1,1}$ , $d_{1,2}$ , ... ,$d_{n,n}$ berechnet, welche zum jeweiligen Neben-Gerät bzw. -System $2_{1,1}$, $2_{1,2}$, ... ,$2_{n,n}$ gehören und im Haupt-Gerät bzw. - System 1 abgespeichert werden:

$$ d := f_N(N_{Öff} H_{ind}) := N_{Öff} H_{ind} \qquad (4b) $$

Im abschließenden Verfahrensschritt S150 des erfindungsgemäßen Verfahren zur Nachindividualisierung von bei mindestens einem Zulieferer gefertigten Neben-Geräten bzw.- Systemen durch den Hersteller wird vom Haupt-Gerät bzw. - System 1 die im vorherigen Verfahrensschritt S140 berechneten endgültigen individuellen Daten d, $d_1$, $d_2$, ... , $d_n$, $d_{1,1}$, $d_{1,2}$, ... , $d_{n,n}$, welche zum jeweiligen Neben-Gerät bzw. - System $2_{1,1}$, $2_{1,2}$, . . . , $2_{n,n}$ gehören, optional unter Anwendung einer entropieerhöhenden Funktion in modifizierte endgültige individuelle Daten d', $d_1$', $d_2$', ... , $d_n$' , $d_{1,1}$', $d_{1,2}$', ... ,$d_{n,n}$' mit einer höheren Sicherheit gegenüber Manipulationen durch Dritte gewandelt. Im abschließenden Verfahrensschritt werden schließlich die endgültigen individuellen bzw. modifizierten endgültigen individuellen Daten d, $d_1$, $d_2$, ... , $d_n$, $d_{1,1}$, $d_{1,2}$, $d_{n,n}$ bzw. d', $d_1$', $d_2$' , ... , $d_n$' , $d_{1,1}$' , $d_{n,n}$' in den nichtflüchtigen Speicherbereich des Haupt-Geräts bzw. -Systems 1 abgespeichert.

Wie aus Gleichung (2a) bzw. (2b) und (4a) bzw. (4b) ersichtlich ist, sind die im Haupt-Geräte bzw. -System 1 berechneten endgültigen individuellen bzw. modifizierten endgültigen individuellen Daten d, $d_1$, $d_2$, ... , $d_n$, $d_{1,1}$, $d_{1,2}$, ... , $d_{n,n}$ bzw. d', $d_1$' , $d_2$' , ... , d', $d_{1,1}$', $d_{1,2}$', ... , $d_{n,n}$' mit dem im jeweiligen Neben-Gerät bzw. -System $2_{1,1}$, $2_{1,2}$, ... , $2_{n,n}$ berechneten endgültigen individuellen bzw. modifizierten endgültigen individuellen Daten d, $d_1$, $d_2$ ... ,$d_n$, $d_{1,1}$, $d_{1,2}$, ..., $d_{n,n}$ bzw. d',$d_1$',$d_2$', ... ,$d_n$',$d_{1,1}$',$d_{1,2}$', ... ,$d_{n,n}$' identisch.

Da die endgültigen individuellen bzw. modifizierten endgültigen individuellen Daten d, $d_1$, $d_2$, ...,$d_n$, $d_{1,1}$, $d_{1,2}$, ..., $d_{n,n}$ bzw. d', $d_1$', $d_2$', ... , $d_n$', $d_{1,1}$', $d_{1,2}$', ... , $d_{n,n}$' einzig dem Hersteller X, dem Haupt-Gerät bzw. -System 1 und allen Neben-Geräten bzw. -Systemen $2_{1,1}$, $2_{1,2}$, ... , $2_{n,n}$ - im Fall von d bzw. d' - bzw. allen beim gleichen Zulieferer $Y_1$, $Y_2$, ..., $Y_n$ gefertigten Neben-Geräten bzw. -Systemen $2_{1,1}$, $2_{1,2}$ , ... , $2_{n,n}$ im Fall von $d_1$, $d_2$, ... , $d_n$ bzw. von $d_1$' , $d_2$' , ... , $d_n$' - bzw. jedem einzelnen Neben-Gerät bzw. - System $2_{1,1}$, $2_{1,2}$, ... ,$2_{n,n}$ - im Fall von $d_{1,1}$, $d_{1,2}$, ... , $d_{n,n}$ bzw. $d_{1,1}$' , $d_{1,2}$' , ... , $d_{n,n}$' - bekannt sind, wird es auf diese Weise dem Hersteller erfindungsgemäß ermöglicht, über den in der Key-Agreement-Phase des erfindungsgemäßen Verfahren zur Nachindividualisierung von bei mindestens einem Zulieferer gefertigten Neben-Geräten bzw. -Systemen durch den Hersteller berechneten endgültigen individuellen bzw. modifizierten endgültigen individuellen Daten d, $d_1$, $d_2$, ... , $d_n$, $d_{1,1}$' $d_{1,2}$' ... , $d_{n,n}$ bzw. d',$d_1$' $d_2$' , ... ,$d_n$', $d_{1,1}$', -$d_{1,2}$' , ... , $d_{n,n}$' die Hoheit über jedes bei einem Zulieferer $Y_1$, $Y_2$, ... , $Y_n$ gefertigte Neben-Gerät bzw. -System $2_{1,1}$, $2_{1,2}$, ... , $2_{n,n}$ zu erlangen.

Die Erfindung ist nicht auf die dargestellte Ausführungsform beschränkt. Insbesondere ist von der Erfindung auch die Variante abgedeckt, in der das jeweilige Neben-Gerät bzw. -System vom jeweiligen Zulieferer nicht zum Hersteller, sondern zu einem weiteren, vom Hersteller autorisierten Zulieferer $Y_m$ transportiert wird, bei dem mit Hilfe des vom Hersteller empfangenen zuliefererspezifischen Datencontainers die Berechnung und Abspeicherung der endgültigen individuellen bzw. modifizierten endgültigen individuellen Daten im jeweiligen Neben-Gerät bzw. -System erfolgt. Der Datenaustausch, der obig beispielhaft zwischen einem Hersteller und seinen Zulieferern dargestellt wurde, ist erfindungsgemäß auch auf einen Datenaustausch zwischen einem Hersteller und den einzelnen Endanwendern des Geräts bzw. Systems und andere Kunden-Lieferanten-Beziehungen übertragbar.

**Patentansprüche**

1. Verfahren zur Nachindividualisierung von bei mindestens einem Zulieferer ($Y_1$, $Y_2$, ... , $Y_n$) gefertigten Neben-Geräten bzw. -Systemen ($2_{1,1}$, $2_{1,2}$, ... , $2_{n,n}$) in einem Telekommunikationssystem durch einen Hersteller (X), indem über eine Key-Agreement-Funktion aus vorläufigen individuellen Daten ($H_{ind}$, $H_{ind1}$, $H_{ind2}$, ... , $H_{indn}$, $H_{ind1,1}$, $H_{ind,2}$, ... , $H_{indn,n}$, $H_{ind}'$, $H_{ind1}'$, $H_{ind2}'$, ... ,$H_{indn}'$, $H_{ind1,1}'$, $H_{ind1,2}'$, ... , $H_{indn,n}'$, $N_{ind}$, $N_{ind1}$, $N_{ind2}$, · · ·$N_{indn}$ , $N_{ind1,1}$, $N_{ind1,2}$, ... , $Ni_{ndn,n}$ , $N_{ind}'$ , $N_{ind1}'$ , $N_{ind2}'$ , ··· , $N_{indn}'$ , $N_{ind1,1}'$ ,$N_{ind\,1,2}'$ , ... , $N_{indn,n}'$) eines beim Hersteller (X) positionierten Haupt-Geräts bzw. -Systems (1) und des Neben-Geräts bzw. - Systems ($2_{1,1}$, $2_{1,2}$, ... , $2_{n,n}$) endgültige indidividuelle Daten ($d$,$d_1$,$d_2$,...,$d_n$,$d_{1,1}$,$d_{1,2}$,...,$d_{n,n}$,$d'$,$d_1'$,$d_2'$,...,$d_n'$,$d_{1,1}'$,$d_{1,2}'$, .. . , $d_{n,n}'$) erzeugt werden, die einzig dem Hersteller (X), dem Haupt-Gerät bzw. -System (1) und mindestens einem Neben-Gerät bzw. -System ($2_{1,1}$, $2_{1,2}$,..., $2_{n,n}$) bekannt sind.

2. Verfahren zur Nachindividualisierung von bei mindestens einem Zulieferer gefertigten Neben-Geräten bzw. - Systemen nach Anspruch 1,
   **dadurch gekennzeichnet,**
   **daß** die vorläufigen individuellen Daten ($H_{ind}$, $H_{ind1}$, $H_{ind2}$, ... , $H_{indn}$, $H_{ind1,1}$, $H_{ind1,2}$, ... , $H_{indn,n}$, $H_{ind}'$ ,$H_{ind1}'$ , $H_{ind2}'$, ... , $H_{indn}'$ , $H_{ind1,1}'$ , $H_{ind1,2}'$ , ... ,$H_{indn,n}'$) des Haupt-Geräts bzw. -Systems (1) nicht-öffentlich sind.

3. Verfahren zur Nachindividualisierung von bei mindestens einem Zulieferer gefertigten Neben-Geräten bzw. - Systemen nach Anspruch 1 oder 2,
   **dadurch gekennzeichnet,**
   **daß** die individuellen Daten ($N_{ind}$, $N_{ind1}$, $N_{ind2}$, ... , $N_{indn}$, $N_{ind1,1}$, $N_{ind1,2}$, ... , $N_{indn,n}$ ,$N_{ind}'$, $N_{ind1}'$, $N_{ind2}'$, ... , $N_{indn,n}'$) des/der Neben-Geräts/e bzw. -Systems/e ($2_{1,1}$, $2_{1,2}$, ... ,$2_{n,n}$) für alle Neben-Geräte bzw. -Systeme ($2_{1,1}$, $2_{1,2}$, ... , $2_{n,n}$) identische Daten ($N_{ind}$ $N_{ind}'$) oder für jedes beim gleichen Zulieferer ($Y_1$,$Y_2$,...,$Y_n$) gefertigte Neben-Gerät bzw. - System ($2_{1,1}$,$2_{1,2}$,...,$2_{n,n}$) identische Daten ($N_{ind1}$,$N_{ind2}$,...,$N_{indn}'$ $N_{ind1}'$, $N_{ind2}'$,... , $N_{indn}'$) oder für jedes Neben-Gerät bzw. System ($2_{1,1}$, $2_{1,2}$,..., $2_{n,n}$) individuelle Daten ($N_{ind1,1}$, $N_{ind1,2}$, ... , $N_{indn,n}$, $N_{ind1,1}'$, $N_{ind1,2}'$,...,$N_{indn,n}'$) sind.

4. Verfahren zur Nachindividualisierung von bei mindestens einem Zulieferer gefertigten Neben-Geräten bzw. - Systemen nach einem der Ansprüche 1 bis 3,
   **dadurch gekennzeichnet,**
   **daß** die individuellen Daten ($H_{ind}$, $H_{ind1}$, $H_{ind2}$, ... , $H_{indn}$, $H_{ind1,1}$, $H_{ind1,2}$, ... , $H_{indn,n}$, $H_{ind}'$ , $H_{ind1}'$ , $H_{ind2}'$ , .... , $H_{indn}'$, $H_{ind1,1}'$,$H_{ind1,2}'$ , ...,$H_{indn,n}'$) des Haupt-Geräts bzw. -Systems (1) für alle Neben-Geräte bzw. -Systeme ($2_{1,1}$, $2_{1,2}$, ... , $2_{n,n}$) identische Daten ($H_{ind}$, $H_{ind}'$) oder für jedes beim gleichen Zulieferer ($Y_1$, $Y_2$, ... , $Y_n$) gefertigte Neben-Gerät bzw. -System ($2_{1,1}$,$2_{1,2}$,... ,$2_{n,n}$) identische Daten ($H_{ind1}$, $H_{ind2}$, ..., $H_{indn}$, $H_{ind1}'$ ,$H_{ind2}'$ , ..., $H_{indn}'$) oder für jedes Neben-Gerät bzw. - System ($2_{1,1}$, $2_{1,2}$,..., $2_{n,n}$) individuelle Daten ($H_{ind1,1}$ , $H_{ind1,2}$,..., $H_{indn,n}$, $H_{ind1,1}'$, $H_{ind1,2}'$ ,..., $H_{indn,n}'$) sind.

5. Verfahren zur Nachindividualisierung von bei mindestens einem Zulieferer gefertigten Neben-Geräten bzw. - Systemen nach einem der Ansprüche 1 bis 4,
   **dadurch gekennzeichnet,**
   **daß** die endgültigen indidividuellen Daten ($d$,$d_1$,$d_2$,..., $d_n$,$d_{1,1}$, $d_{1,2,...}d_{n,n}$, $d'$ ,$d_1'$ ,$d_2'$,...,$d_n'$ ,$d_{1,1}'$ ,$d_{1,2}'$,...,$d_{n,n}'$) entweder endgültige indidividuelle Daten ($d$,$d'$), die dem Hersteller (X), dem Haupt-Gerät bzw. -System (1) und allen Neben-Geräten bzw. -Systemen ($2_{1,1}$,$2_{1,2}$, ... , $2_{n,n}$) bekannt sind, oder endgültige indididuelle Daten ($d_1$,$d_2$,...,$d_n$, $d_1'$ , $d_2'$ , ... , $d_n'$), die dem Hersteller (X), dem Haupt-Gerät bzw. -System (1) und allen beim gleichen Zulieferer ($Y_1$, $Y_2$, ... , $Y_n$) gefertigten Neben-Geräten bzw. -Systemen ($2_{1,1}$, $2_{1,2}$, ... ,$2_{n,n}$) bekannt sind, oder endgültige indidividuelle Daten ($d_{1,1}$, $d_{1,2}$, ... , $d_{n,n}$, $d_{1,1}'$, $d_{1,2}'$, ... , $d_{n,n}'$) sind, die dem Hersteller (X), dem Haupt-Gerät bzw. -System (1) und allen Neben-Geräten bzw. -Systemen ($2_{1,1}$, $2_{1,2}$, ... , $2_{n,n}$) bekannt sind.

6. Verfahren zur Nachindividualisierung von bei mindestens einem Zulieferer gefertigten Neben-Geräten bzw. - Systemen nach einem der Ansprüche 1 bis 5,
   **dadurch gekennzeichnet,**
   **daß** die endgültigen individuellen Daten ($d$,$d_1$,$d_2$, ... , $d_n$,$d_{1,1}$,$d_{1,2}$, . . . ,$d_{n,n}$,$d'$,$d_1'$,$d_2'$, ... ,$d_n'$ ,$d_{1,1}'$,$d_{1,2}'$, ... ,$d_{n,n}'$) individuelle Codierungsschlüssel, individuelle Signaturschlüssel oder individuelle kennzeichnende Daten sind.

7. Verfahren zur Nachindividualisierung von bei mindestens einem Zulieferer gefertigten Neben-Geräten bzw. - Systemen nach einem der Ansprüche 1 bis 6,
   **dadurch gekennzeichnet,**
   **daß** die Key-Agreement-Funktion eine Diffie-Hellmann-Funktion ist.

8. Verfahren zur Nachindividualisierung von bei mindestens einem Zulieferer gefertigten Neben-Geräten bzw. - Systemen nach einem der Ansprüche 1 bis 7,
**dadurch gekennzeichnet,**
**daß** die Key-Agreement-Funktion über eine elliptische Kuve ($\Gamma$) über einem endlichen Körper (K) realisiert ist.

9. Verfahren zur Nachindividualisierung von bei mindestens einem Zulieferer gefertigten Neben-Geräten bzw. - Systemen nach einem der Ansprüche 1 bis 8,
**dadurch gekennzeichnet,**
**daß** das Haupt-Gerät bzw. -System (1) beim Hersteller (X) positioniert ist.

10. Verfahren zur Nachindividualisierung von bei mindestens einem Zulieferer gefertigten Neben-Geräten bzw. - Systemen nach einem der Ansprüche 1 bis 9,
**dadurch gekennzeichnet,**
**daß** das jeweilige Neben-Gerät bzw. -System ($2_{1,1}$, $2_{1,2}$, ... , $2_{n,n}$) bei einem vom Hersteller (X) beauftragten Zulieferer ($Y_1$, $Y_2$,..., $Y_n$) primär produziert wird.

11. Verfahren zur Nachindividualisierung von bei mindestens einem Zulieferer gefertigten Neben-Geräten bzw. - Systemen nach Anspruch 10,
**dadurch gekennzeichnet,**
**daß** die zum Neben-Gerät bzw. -System ($2_{1,1}$, $2_{1,2}$,..., $2_{n,n}$) gehörigen vorläufigen individuellen Daten ($N_{ind}$, $N_{ind1}$, $N_{ind2}$, ... , $N_{indn}$, $N_{ind1,1}$, $N_{ind1,2}$, ... , $N_{indn,n}$, $N_{ind}'$, $N_{ind1}'$, $N_{ind2}'$, ... , $N_{indn}'$, $N_{ind1,1}'$, $N_{ind1,2}'$ , ... , $N_{indn,n}'$) vom jeweiligen Zulieferer ($Y_1$, $Y_2$, ... , $Y_n$) erzeugt werden.

12. Verfahren zur Nachindividualisierung von bei mindestens einem Zulieferer gefertigten Neben-Geräten bzw. - Systemen nach Anspruch 10 oder 11,
**dadurch gekennzeichnet,**
**daß** die zum Neben-Gerät bzw. -System ($2_{1,1}$, $2_{1,2}$ $2_{n,n}$) gehörigen individuellen Daten ($N_{ind}$, $N_{ind1}$, $N_{ind2}$, ... , $N_{indn}$, $N_{ind1,1}$, $N_{ind1,2}$, ... , $N_{indn,n}$, $N_{ind}'$, $N_{ind1}'$, $N_{ind2}'$, ... , $N_{indn}'$, $N_{ind1,1}'$, $N_{ind1,2}'$, ... , $N_{indn,n}'$) vom Hersteller (X) erzeugt werden.

13. Verfahren zur Nachindividualisierung von bei mindestens einem Zulieferer gefertigten Neben-Geräten bzw. - Systemen nach einem der Ansprüche 10 bis 12,
**dadurch gekennzeichnet,**
**daß** die zum Neben-Gerät bzw. -System ($2_{1,1}$, $2_{1,2}$, ... , $2_{n,n}$) gehörigen individuellen Daten ($N_{ind}$, $N_{ind1}$, $N_{ind2}$, ... , $N_{indn}$, $N_{ind1,1}'$, $N_{ind1,2}$, ... , $N_{indn,n}$, $N_{ind}'$, $N_{ind1}'$, $N_{ind2}'$, ... , $N_{indn}'$, $N_{ind1,1}'$, $N_{ind1,2}'$, .... , $N_{indn,n}'$ ) vom jeweiligen Neben-Gerät bzw. -System ($2_{1,1}$, $2_{1,2}$, ..., $2_{n,n}$) selbst erzeugt werden.

14. Verfahren zur Nachindividualisierung von bei mindestens einem Zulieferer gefertigten Neben-Geräten bzw. - Systemen nach einem der Ansprüche 1 bis 13,
**dadurch gekennzeichnet,**
**daß** die vorläufigen individuellen Daten ($H_{ind}$, $H_{ind1}$, $H_{ind2}$, ... , $H_{indn}$, $H_{ind1,1}$, $H_{ind1,2}$ , ... , $H_{indn,n}$, $N_{ind}$, $N_{ind1}$, $N_{ind2}$, ... , $N_{indn}$, $N_{ind1,1}$, $N_{ind1,2}$, ... $N_{indn,n}$) über eine scheinbar entropieerhöhende Funktion in modifizierte vorläufige individuelle Daten ($H_{ind}'$, $H_{ind1}'$, $H_{ind2}'$ , ... , $H_{indn}'$, $H_{ind1,1}'$, $H_{ind1,2}'$, ... , $H_{indn,n}'$ , $N_{ind}'$, $N_{ind1}'$, $N_{ind2}'$, ... , $N_{indn}'$, $N_{ind1,1}'$ , $N_{ind1,2}'$ , ... , $N_{indn,n}'$) gewandelt werden.

15. Verfahren zur Nachindividualisierung von bei mindestens einem Zulieferer gefertigten Neben-Geräten bzw. - Systemen nach Anspruch 14,
**dadurch gekennzeichnet,**
**daß** die erzeugten vorläufigen individuellen Daten ($N_{ind}$, $N_{ind1}$, $N_{ind2}$, ... , $N_{indn}$, $N_{ind1,1}$, $N_{indn,n}$) oder die erzeugten modifizierten individuellen Daten ($N_{ind}'$, $N_{ind1}'$, $N_{ind2}'$ , ... , $N_{indn}'$, $N_{ind1,1}'$, $N_{ind1,2}'$, ... , $N_{indn,n}'$) vom jeweiligen Zulieferer ($Y_1$, $Y_2$,..., $Y_n$) in einer Vorinitialisierung in einem geschützten Speicherbereich des Neben-Geräts bzw. -Systems ($2_{1,1}$, $2_{1,2}$... , $2_{n,n}$) abgespeichert werden.

16. Verfahren zur Nachindividualisierung von bei mindestens einem Zulieferer gefertigten Neben-Geräten bzw. - Systemen nach Anspruch 15,
**dadurch gekennzeichnet,**
**daß** das Neben-Gerät bzw. -System ($2_{1,1}$, $2_{1,2}$, . . . , $2_{n,n}$) nach der Vorinitialisierung vom jeweiligen Zulieferer ($Y_1$, $Y_2$, ... , $Y_n$) zum Hersteller (X) transportiert wird.

**17.** Verfahren zur Nachindividualisierung von bei mindestens einem Zulieferer gefertigten Neben-Geräten bzw. - Systemen nach Anspruch 14,
**dadurch gekennzeichnet,**
**daß** die im Haupt-Gerät bzw. -System (1) aus den vorläufigen individuellen Daten ($H_{ind}$, $H_{ind1}$, $H_{ind2}$, ... , $H_{indn}$, $H_{ind1,1}$ ,$H_{ind1,2}$ ,..., $H_{indn,n}$) bzw. aus den modifizierten vorläufigen individuellen Daten ($H_{ind}$', $H_{ind1}$' , $H_{ind2}$' , ... , $H_{indn}$', $H_{ind1,1}$' ,$H_{ind1,2}$') des Haupt-Geräts (1) über eine Key-Agreement-Funktion ermittelten öffentlichen Daten ($H_{öff}$, $H_{öff1}$, $H_{öff2}$, ... , $H_{öffn}$ ,$H_{öff1,1}$, $H_{öff1,2}$, ... , $H_{öffn,n}$ , $H_{öff}$' , $H_{öff1}$' , $H_{öff2}$' ,..., $H_{öffn}$' , $H_{öff1,1}$' , $H_{öff1,2}$' , ... , $H_{öffn,n}$ ') des Haupt-Geräts (1) in einem zuliefererspezifischen Datencontainer ($Z_1$,$Z_2$,...,$Z_n$) zu dem zum Hersteller (X) transportierten Neben-Gerät bzw. -System ($2_{1,1}$, $2_{1,2}$, ... , $2_{n,n}$) übertragen und aus dem Datencontainer ($Z_1$,$Z_2$,...,$Z_n$) in das Neben-Gerät bzw. -System ($2_{1,1}$, $2_{1,2}$, ... , $2_{n,n}$) extrahiert werden.

**18.** Verfahren zur Nachindividualisierung von bei mindestens einem Zulieferer gefertigten Neben-Geräten bzw. - Systemen nach Anspruch 16,
**dadurch gekennzeichnet,**
**daß** die vorläufigen individuellen Daten ($N_{ind}$, $N_{ind1}$, $N_{ind2}$, . . . ,$N_{idn}$,$N_{ind1,1}$,$N_{ind1,2}$, . . . ,$N_{indn,n}$) und die modifizierten vorläufigen individuellen Daten ($N_{ind}$', $N_{ind1}$' , $N_{ind2}$' , . . . ,$N_{indn}$',$N_{ind1,1}$', $N_{ind1,2}$',. . . , $N_{indn,n}$') jedes zum Hersteller (X) transportierten Neben-Geräts bzw. -Systems ($2_{1,1}$,$2_{1,2}$, . . . , $2_{n,n}$) in das Haupt-Gerät bzw. -System (1) übertragen werden.

**19.** Verfahren zur Nachindividualisierung von bei mindestens einem Zulieferer gefertigten Neben-Geräten bzw. - Systemen nach einem der Ansprüche 1 bis 18,
**dadurch gekennzeichnet,**
**daß** die jeweils im Haupt-Gerät bzw. -System (1) und Neben-Gerät bzw. -System ($2_{1,1}$ $2_{1,2}$,.., ,$2_{n,n}$) jeweils über eine Key-Agreement-Funktion berechneten endgültigen individuellen Daten (d, $d_1$, $d_2$, ..., $d_n$, $d_{1,1}$, $d_{1,2}$ ... , $d_{n,n}$) jeweils über eine entropieerhöhende Funktion in modifizierte endgültige individuelle Daten (d' ,$d_1$',$d_2$',...,$d_n$' ,$d_{1,1}$', $d_{1,2}$',...,$d_{n,n}$') mit höherer Sicherheit gegenüber Manipulation durch Dritte gewandelt und jeweils in einem geschützten Speicherbereich des Haupt-Geräts bzw. -Systems (1) und Neben-Geräts bzw. - Systems ($2_{1,1}$,$2_{1,2}$, . . . ,$2_{n,n}$) abgespeichert werden.

**20.** Verfahren zur Nachindividualisierung von bei mindestens einem Zulieferer gefertigten Neben-Geräten bzw. - Systemen nach Anspruch 17 oder 19,
**dadurch gekennzeichnet,**
**daß** zur Überprüfung der Herkunft des Neben-Geräts bzw. - Systems ($2_{1,1}$,$2_{1,2}$, . . . ,$2_{n,n}$) der zuliefererspezifische Datencontainer ($Z_1$, $Z_2$, . . . , $Z_n$) mit einer Signatur chiffriert und ein in der Vorinitialisierung des Neben-Geräts bzw.-Systems ($2_{1,1}$, $2_{1,2}$, . . . ,$2_{n,n}$) vom jeweiligen Zulieferer ($Y_1$,$Y_2$, . . . ,$Y_n$) zur Signatur passender Signaturschlüssel im geschützten Speicherbereich des Neben-Geräts bzw. -Systems ($2_{1,1}$, $2_{1,2}$, ... , $2_{n,n}$) abgespeichert wird, der die Signatur des beim Hersteller (X) zum Neben-Gerät bzw. -System ($2_{1,1}$, $2_{1,2}$, ... , $2_{n,n}$) übertragenen zuliefererspezifischen Datencontainers ($Z_1$,$Z_2$ ,..., $Z_n$) verifiziert.

**21.** Telekommunikationssystem mit einem Haupt-Gerät bzw. - System (1) und mindestens einem Neben-Gerät bzw. -System ($2_{1,1}$, $2_{1,2}$, ... , $2_{n,n}$) , in dem endgültige individuelle Daten (d, $d_1$, $d_2$, ... , $d_n$, $d_{1,1}$, $d_{1,2}$, ... , $d_{n,n}$) oder modifizierte endgültige individuelle Daten (d' , $d_1$' , $d_2$' , ... , $d_n$' , $d_{1,1}$' , $d_{1,2}$' , ... , $d_{n,n}$') für mindestens ein Neben-Gerät bzw. -System ($2_{1,1}$, $2_{1,2}$, ... , $2_{n,n}$) nach einem der Ansprüche 1 bis 20 erzeugt werden.

**22.** Digitales Speichermedium mit elektronisch auslesbaren Steuersignalen, die so mit einem programmierbaren Computer oder digitalen Signalprozessor eines Telekommunikationsgerätes zusammenwirken können, daß das Verfahren nach einem der Ansprüche 1 bis 20 ausgeführt wird.

**23.** Computerprogramm-Produkt mit auf einem maschinenlesbaren Träger gespeicherten Programmcode-Mitteln, um alle Schritte gemäß einem der Ansprüche 1 bis 20 durchführen zu können, wenn das Programm auf einem Computer oder einem digitalen Signalprozessor eines Telekommunikationsgerätes ausgeführt wird.

**24.** Computerprogramm mit Programmcode-Mitteln, um alle Schritte gemäß einem der Ansprüche 1 bis 20 durchführen zu können, wenn das Programm auf einem Computer oder einem digitalen Signalprozessor eines Telekommunikationsgerätes ausgeführt wird.

**25.** Computerprogramm mit Programmcode-Mitteln, um alle Schritte gemäß einem der Ansprüche 1 bis 20 durchführen zu können, wenn das Programm auf einem maschinenlesbaren Datenträger gespeichert ist.

Hersteller X:

Zulieferer $Y_1$:

$2_{1,1}$ $\qquad$ $2_{1,2}$ $\qquad$ $2_{1,n}$

1

$\cdots$

Zulieferer $Y_2$:

$2_{2,1}$ $\qquad$ $2_{2,2}$ $\qquad$ $2_{2,m}$

$\cdots$

Fig. 1

Start

S10 — Bestimmung der vorläufigen individuellen
Daten für Neben-Geräte bzw. -Systeme

S20 — Optionale Bestimmung von modifizierten vorläufigen
individuellen Daten für Neben-Geräte bzw. -Systeme

S30 — Vorindividualisieren der Neben-Geräte bzw. -Systeme mit
vorläufigen individuellen Daten zzgl. Signaturschlüssel

S40 — Bestimmung der individuellen bzw. modifizierten
individuellen Daten für Haupt-Gerät bzw. -Systeme

S50 — Festlegung der Key-Agreement-Funktion u. deren Parameter
zwischen Haupt-Gerät bzw. -System u. Neben-Geräte / Systemen

S60 — Ermittlung der Korrespondierenden öffentlichen Daten des Haupt-Geräts
bzw. Systems mittels Key-Agreement-Funktions u. Verpacken zzgl. der
Key-Agreement-FKt.-Parameter in Datencontainer zzgl.
der zuliefererspezifischen Signatur

S70 — Transport des produzierten Neben-Geräts bzw. -Systems
vom Zulieferer zum Hersteller

S80 — Extrahieren der öffentlichen Daten des Haupt-Geräts bzw. -Systems
bzw. der Key-Agreement-KFt.-Parameter aus Datencontaier in
geliefertes Neben-Gerät bzw. -System

S90 — Verifizierung der Herkunft des Neben-Geräts bzw.- Systems mittels
Prüfung d. Signatur durch Signaturschlüssel des Neben-Geräts
bzw. -Systems

S100 — Auslesen der individuellen bzw. modifizierten individuellen Daten
des Neben-Geräts/-Systems durch Haupt-Gerät / System

Ende

Fig. 2

Start

S110 — Ermittlung der endgültigen individuellen Daten im Neben-Gerät bzw.-System aus vorläufigen individuellen Daten des Neben-Geräts / Systems u. öffentlichen Daten des Haupt-Geräts/-Systems mittels Key-Agreement-Funktion

S120 — Optionale Bestimmung von modifizierten endgültigen individuellen Daten und Nachindividualisierung des Neben-Geräts / Systems mit (modifizierten) endgültigen individuellen Daten

S130 — Ermitteln der Korrespondierenden öffentlichen Daten des jeweiligen Neben-Geräts/-Systems mittels Key-Agreement-Funktion im Haupt-Gerät/-System

S140 — Ermitteln des zum jeweiligen Neben-Gerät/-System gehörigen endgültigen individuellen Daten im Haupt-Gerät/-System aus individuellen Daten des Haupt-Geräts/-Systems u. öffentlichen Daten des jeweiligen Neben-Geräts/-Systems mittels Key-Agreement-Funktion

S150 — optionale Bestimmung von modifizierten endgültigen zum jeweiligen Neben-Gerät/-System gehörigen individuellen Daten und Abspeichern im Haupt-Gerät/-System

Ende

Fig. 3

Europäisches
Patentamt

**EUROPÄISCHER RECHERCHENBERICHT**

Nummer der Anmeldung

EP 06 00 2089

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 022 696 A (GIESECKE & DEVRIENT GMBH) 26. Juli 2000 (2000-07-26) * Absatz [0007] * * Absatz 13 - Spalte 5, Zeile 27 * * Spalte 5, Zeile 51 - Zeile 55 * ----- | 1-4,6,7, 13,21-25 | INV. H04L9/08 |

| RECHERCHIERTE SACHGEBIETE (IPC) |
|---|
| H04L G07F |

Der vorliegende Recherchenbericht wurde für alle Patentansprüche erstellt

| Recherchenort | Abschlußdatum der Recherche | Prüfer |
|---|---|---|
| Den Haag | 27. April 2006 | Holper, G |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
...............................................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 06 00 2089

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-04-2006

| Im Recherchenbericht angeführtes Patentdokument | Datum der Veröffentlichung | Mitglied(er) der Patentfamilie | Datum der Veröffentlichung |
|---|---|---|---|
| EP 1022696 A | 26-07-2000 | DE 19902722 A1<br>JP 2000231329 A | 27-07-2000<br>22-08-2000 |

EPO FORM P0461

Für nähere Einzelheiten zu diesem Anhang : siehe Amtsblatt des Europäischen Patentamts, Nr.12/82